(19) Europäisches Patentamt / European Patent Office / Office européen des brevets

(11) **EP 4 000 762 B1**

(12) **EUROPÄISCHE PATENTSCHRIFT**

(45) Veröffentlichungstag und Bekanntmachung des Hinweises auf die Patenterteilung:
**18.09.2024   Patentblatt 2024/38**

(21) Anmeldenummer: **20208708.6**

(22) Anmeldetag: **19.11.2020**

(51) Internationale Patentklassifikation (IPC):
**B22F 1/05** (2022.01)      **B22F 10/28** (2021.01)
**B33Y 10/00** (2015.01)     **B33Y 40/00** (2020.01)
**B33Y 40/10** (2020.01)     **B33Y 70/00** (2020.01)
**C22C 38/02** (2006.01)     **C22C 38/04** (2006.01)
**C22C 38/06** (2006.01)     **C22C 38/18** (2006.01)
**C22C 38/22** (2006.01)     **C22C 38/24** (2006.01)
**C22C 38/28** (2006.01)     **C22C 38/32** (2006.01)
**C22C 38/38** (2006.01)     **C22C 38/40** (2006.01)
**B22F 12/17** (2021.01)

(52) Gemeinsame Patentklassifikation (CPC):
(C-Sets verfügbar)
**C22C 38/02; B22F 1/05; B22F 10/28; B22F 12/17;
B33Y 10/00; B33Y 40/00; B33Y 40/10;
B33Y 70/00; C22C 38/04; C22C 38/06;
C22C 38/18; C22C 38/22; C22C 38/24;
C22C 38/28; C22C 38/32;**                    (Forts.)

(54) **VERWENDUNG EINES STAHLPULVERS FÜR EINE ADDITIVE FERTIGUNG EINES STAHLBAUTEILS**

USE OF A STEEL POWDER FOR AN ADDITIVE MANUFACTURING PROCESS OF A STEEL COMPONENT

UTILISATION D'UNE POUDRE D'ACIER POUR LA FABRICATION ADDITIVE D'UNE PIÈCE EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.05.2022   Patentblatt 2022/21**

(73) Patentinhaber: **Deutsche Edelstahlwerke Specialty Steel GmbH & Co. KG
58452 Witten (DE)**

(72) Erfinder:
* **Krull, Dr. Hans-Günter
  47506 Neukirchen-Vluyn (DE)**
* **van Soest, Frank
  47918 Tönisvorst (DE)**
* **Richert, Svenja
  44388 Dortmund (DE)**
* **Hill, Dr. Horst
  47929 Grefrath (DE)**
* **Kluge, Philipp
  47229 Duisburg (DE)**

(74) Vertreter: **Cohausz & Florack
Patent- & Rechtsanwälte
Partnerschaftsgesellschaft mbB
Bleichstraße 14
40211 Düsseldorf (DE)**

(56) Entgegenhaltungen:
**EP-A1- 0 754 942          EP-A1- 2 662 462
EP-B1- 0 754 942          WO-A1-01/79575
US-A1- 2010 221 139**

* **SAEWE JASMIN ET AL: "Feasability Investigation for Laser Powder Bed Fusion of High-Speed Steel AISI M50 with Base Preheating System", BHM. BERG UND HUETTENMAENNISCHE MONATSHEFTE, SPRINGER, VIENNA, AU, vol. 164, no. 3, 14 February 2019 (2019-02-14), pages 101 - 107, XP036735316, ISSN: 0005-8912, [retrieved on 20190214], DOI: 10.1007/S00501-019-0828-Y**

- **KEMPEN KAROLIEN ET AL: "Selective Laser Melting of Crack-Free High Density M2 High Speed Steel Parts by Baseplate Preheating", JOURNAL OF MANUFACTURING SCIENCE AND ENGINEERING, vol. 136, no. 6, 24 October 2014 (2014-10-24), US, XP055791443, ISSN: 1087-1357, Retrieved from the Internet <URL:http://asmedigitalcollection.asme.org/manufacturingscience/article-pdf/doi/10.1115/1.4028513/6266710/manu_136_06_061026.pdf> DOI: 10.1115/1.4028513**

(52) Gemeinsame Patentklassifikation (CPC): (Forts.)
**C22C 38/38; C22C 38/40;** B22F 2203/11;
B22F 2999/00; Y02P 10/25

C-Sets
B22F 2999/00, B22F 12/17, B22F 2203/11

**Beschreibung**

Die Erfindung betrifft eine Verwendung eines Stahlpulvers für eine additive Fertigung eines Stahlbauteils, bei der in einem mehrfach wiederholten Arbeitsablauf auf einer Heizplatte zum Aufbau des Bauteils Stahlpulver aufgetragen wird, das aufgetragene Stahlpulver mittels Elektronen- oder Laserstrahl zu einer Schmelzenportion aufgeschmolzen wird und die jeweils aufgeschmolzene Schmelzenportion zu einem festen Abschnitt des Stahlbauteils abgekühlt wird, wobei das auf diese Weise abschnittsweise wachsende Bauteil während der Herstellung mittels der Heizplatte auf einer Temperatur gehalten wird, die mindestens einer Mindestheiztemperatur Tmin entspricht und höchstens 225 °C beträgt.

Wenn nachfolgend "%"-Angaben zu Stahlzusammensetzungen gemacht werden, so beziehen diese sich jeweils auf die Masse (Angabe in "Masse-"), soweit nicht ausdrücklich etwas anderes genannt ist.

Die Anteile bestimmter Bestandteile am Gefüge eines Stahlwerkstoffs oder eines Stahlbauteils sind im vorliegenden Text in Volumen-% ("Vol.-%") angegeben, soweit nicht ausdrücklich etwas anderes vermerkt ist.

Genauso sind die Anteile, die die verschiedenen Partikel am Gesamtvolumen des erfindungsgemäß verwendeten Pulvers einnehmen, jeweils in Vol.-% angegeben, soweit nichts anderes ausdrücklich vermerkt ist.

Die hier in HRC angegebenen Härtewerte sind das Ergebnis einer Härteprüfung nach Rockwell, die gemäß DIN EN ISO 6508-1: 2016-12 durchgeführt worden ist.

Die Herstellung von aus Stahlpartikeln bestehenden Pulvern kann in bekannter Weise durch Verdüsen oder durch eine mechanische Zerkleinerung, wie Nassmahlen, erfolgen. Ebenso ist in an sich ebenfalls bekannter Weise ein mechanisches Legieren von Elementarpulvern möglich, die in den hierzu notwendigen Korngrößen bereitgestellt und in der erfindungsgemäßen Legierungsvorschrift entsprechenden Mengen miteinander vermischt werden.

Stahlpulver werden im Stand der Technik auf unterschiedliche Weise für die Herstellung von Bauteilen verwendet.

Ein erstes Beispiel hierfür ist das in der WO 01/79575 A1 dargestellte Verfahren, bei dem ein stickstofflegierter Stahl mit einer hohen Verschleißbeständigkeit durch Sprühkompaktieren hergestellt wird. Hierzu weist der Stahl, in Masse-%, 0,8 - 2,5 % C, 0,03 - 0,75 % N, 0,15 - 1,8 % Si, $\leq$ 1,0 % Mn, $\leq$ 0,03 % P, $\leq$ 0,05 % S, 4,0 -11,5 % Cr, 0,5 - 6,0 % Mo, $\leq$ 4,0 % V, $\leq$ 4,0 % Nb, $\leq$ 3,5 % W, $\leq$ 0,005 % O2, gegebenenfalls weitere Legierungsbestandteile und als Rest Eisen und übliche Verunreinigungen auf. Die chemische Zusammensetzung ist dahingehend optimiert, dass die carbid-/carbonitridbildenden Elemente einen Verschleißfaktor SV erfüllen und das Silicium-Stickstoff-Verhältnis VSiN zur Minimierung der Restaustenitgehalte eingehalten wird.

In der EP 2 662 462 A1 sind allgemein weit gefasste Legierungen für Niedertemperatur-härtbare Stähle mit ausgezeichneter Bearbeitbarkeit angegeben, deren einziger Pflichtbestandteil Kohlenstoff mit Gehalten von 0,15 - 3,0 Gew.-% ist. Optional soll die jeweilige Legierung beispielsweise Gehalte an N, B, Cr, Ni, Si, Mn, Al, Mo, W, Ti, Ta, Zr, Hf, V, Nb, Cu und Co in jeweils großen Gehaltsspannen aufweisen können. Am Rande ist erwähnt, dass sich derart breit zusammengesetzte Stähle auch für pulvermetallurgische Verwendungen eignen.

In der EP 0 754 942 A1 ist ein Verfahren beschrieben, bei dem ein beispielsweise aus dem Stahl 1.2842 bestehendes Pulver durch heißisostatisches Pressen zu einer Härtevergleichsplatte geformt wird. zu diesem Zweck wird das Stahlpulver in eine Stahlkapsel gefüllt. Anschließend wird die Kapsel evakuiert, verschlossen und das in ihr enthaltene Pulver unter einem Druck von 100 - 4000 bar bei einer Temperatur, bei der keine Flüssigkeitsphase während des Pressens auftritt, zu der jeweiligen Platte verpresst.

Unter dem Begriff "additive Fertigungsverfahren" werden alle Herstellverfahren zusammengefasst, bei denen ein Werkstoff zur Erzeugung eines Bauteils hinzugefügt wird. Dieses Hinzufügen erfolgt in der Regel schichtweise. "Additive Herstellverfahren", die in der Fachsprache oft auch als "generative Verfahren" oder allgemein als "3D-Drucken" bezeichnet werden, stehen damit im Gegensatz zu den klassischen subtraktiven Fertigungsverfahren, wie den spanenden Verfahren (z.B. Fräsen, Bohren und Drehen), bei denen Material abgetragen wird, um dem jeweils herzustellenden Bauteil seine Form zu verleihen.

Das additive Fertigungsprinzip ermöglicht es, geometrisch komplexe Strukturen herzustellen, die mit konventionellen Fertigungsverfahren, wie den schon genannten spanabhebenden Verfahren oder Ur- und Umformverfahren (Gießen, Schmieden), nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv).

Nähere Definitionen der Verfahren, die unter dem Oberbegriff "Additive Verfahren" zusammengefasst sind, finden sich beispielsweise in den VDI-Richtlinien 3404 und 3405.

Die Verarbeitung von Stahlpulvern in der additiven Fertigung ist heute prinzipiell möglich. Für die Erzeugung der Partikel hierzu geeigneter Stahlpulver werden dabei üblicherweise Stähle eingesetzt, die als schweißbar gelten. Dies sind Stähle mit Kohlenstoffgehalten unter 0,30 Masse-%, vorzugsweise unter 0,20 Masse-%, wobei sich Stähle mit minimierten, im Verunreinigungsbereich liegenden Kohlenstoffgehalten von unter 0,05 Masse-% als besonders geeignet herausgestellt haben.

Ein generelles Problem bei der Verarbeitung von Stahlpulvern in der additiven Fertigung besteht darin, dass die dabei jeweils vom Elektronen- oder Laserstrahl, typischerweise unter Vakuum, erfasste Pulverportion sehr schnell aufgeschmolzen und das so gebildete kleine Schmelzenvolumen anschließend unter Anbindung an den zuvor schon verfestigten Abschnitt des Bauteils rasch abgekühlt wird. In Folge dieser schnellen, prozessbedingt hohen Abkühlrate mit sich bringende Abkühlung kommt es zu hohen thermischen Spannungen, die insbesondere bei Stählen mit höheren Kohlenstoffgehalten zu Rissen im Bauteil führen können.

Um diese Gefahr von Spannungsrissen zu minimieren, ist es sinnvoll, für die additive Fertigung Pulver aus Stählen zu verwenden, die trotz bei der unvermeidbar schnellen Abkühlung einen möglichst weichen Gefügezustand bilden. Hier bietet sich der weichmartensitische Werkstoff oder Werkstoffe an, die ein durch so genannten "Lanzettmartensit" gekennzeichnetes Gefüge ausbilden. Beispiele für solche Stähle sind die unter der Bezeichnung "Maraging-Stähle" bekannten Stähle, deren Legierung beispielsweise unter den Werkstoffnummern 1.2709, 1.6315, 1.4545 und 1.4542 genormt sind.

Solche Stähle erreichen ihre mechanischen Eigenschaften auf Basis einer martensitischen Umwandlung (ohne Zwangslösung von C -> C-freier Nickel- bzw. Weichmartensit) und einer anschließenden Ausscheidungshärtung. Die dabei entstehenden Ausscheidungen und intermetallischen Phasen bewirken die Härtesteigerung. Aufgrund des minimierten C-Gehalts entstehen Karbide nur in einem minimierten Umfang. Voraussetzung dafür, dass die Maraging-Stähle trotz ihrer geringen Kohlenstoffgehalte die geforderten mechanischen Eigenschaften erreichen, müssen sie mit hohen Gehalten an teuren Legierungselementen, wie Mo, Co oder Ni, legiert sein. Dabei lassen sich aus Maraging-Stählen bestehende Bauteile aufgrund der fehlenden Kohlenstoffgehalte nicht induktiv randschichthärten.

Mit "Verfahren zur induktiven Härtung einer Randschicht" werden Verfahren bezeichnet, bei denen die an die jeweils zu härtende Fläche angrenzende Randschicht des Stahlmaterials, aus dem das jeweils die Fläche tragende Bauteil besteht, mittels eines in das Bauteil induzierten elektromagnetischen Feldes auf Härtetemperatur erwärmt wird und bei dem anschließend der so erwärmte Abschnitt der Randschicht durch Beaufschlagung mit einem geeigneten Abschreckmittel ausreichend schnell abgekühlt wird, um in dem betreffenden Randabschnitt Härtegefüge zu erzeugen.

Die technischen und physikalischen Hintergründe des induktiven Randschichthärtens sind im Merkblatt 236, "Wärmebehandlung von Stahl - Randschichthärten", Ausgabe 2009, erläutert, das von der Wirtschaftsvereinigung Stahl, Sohnstraße 65, 40237 Düsseldorf, herausgegeben wird und unter der URL https://www.stahl-online.de/index.php/service/publikationen/stahlanwendung-dokumentationen/2/, Auffindedatum 15. November 2020, zum Download bereitsteht.

Eine bekannte Möglichkeit, bei höheren Kohlenstoffgehalten die Umwandlung des im Zuge der additiven Fertigung aufgeschmolzenen Stahlschmelze in den harten Martensit zu umgehen, ist der Einsatz einer Heizplatte, in der Fachsprache auch "Heizbett" genannt. Für die industrielle Fertigung zur Verfügung stehende Vorrichtungen zur additiven Fertigung verfügen allerdings n7icht über diese Option oder sind mit Heizplatten ausgestattet, die das jeweilige Bauteil auf Temperaturen von maximal 225 °C aufheizen können. Typisch sind Aufheiztemperaturen von bis zu 200 °C. Der Grund für diese Grenze besteht darin, dass wegen der schlechten Wärmeleitfähigkeit des bei der additiven Fertigung eingesetzten Stahlpulvers eine stärkere Beheizung bei nur kleinen Bauhöhen von typischerweise weniger als 200 mm zu verbesserten Resultaten führt. Auch kann es bei einer sehr starken Beheizung dazu kommen, dass es aufgrund des starken Wärmeeintrags zu unerwünschten Reaktionen das Stahlpulvers, wie einem Abbrennen unter starker Rauchgasentwicklung, kommt. Vorrichtungen mit Heizplatten, die in der Lage sind, Heiztemperaturen von 500 °C und mehr aufrechtzuerhalten, sind daher in der Praxis die Ausnahme.

Vor dem Hintergrund des voranstehend erläuterten Standes der Technik bestand die Aufgabe der Erfindung darin,

- ein Stahlpulver anzugeben, das sich für die Erzeugung von hinsichtlich ihrer Härtbarkeit und Verschleißbeständigkeit optimierten Bauteilen in einem additiven Verfahren P

verwenden lässt.

Zur Lösung dieser Aufgabe schlägt die Erfindung die in Anspruch 1 angegebene Verwendung vor.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäß für eine additive Fertigung eines Stahlbauteils verwendetes Stahlpulver ist demnach durch Stahlpartikel gebildet, die aus einem Stahl erzeugt sind, der eine Martensitstarttemperatur $M_s$ von höchstens 225 °C aufweist und, in Masse-%, aus

| | | |
|---|---|---|
| C: | 0,80 | - 1,20 %, |
| Si: | 0,1 | - 1,0 %, |
| Mn: | 0,1 | - 4,0 %, |
| Ni: | | ≤ 2,0 %, |
| Cr: | | ≤ 6,00 %, |

4

(fortgesetzt)

| | | |
|---|---|---|
| Mo: | | ≤ 3,0 %, |
| W: | | ≤ 6,0 %, |
| S: | | ≤ 0,05 %, |
| Al: | 0,004 | - 0,035 %, |
| V: | 0,02 | - 0,20 %, |
| Ti: | | ≤ 0,10 %, |
| Nb: | | ≤ 0,40 %, |
| B: | | ≤ 0,0030 %, |

und als Rest aus Eisen und stahltypischen Verunreinigungen besteht, die in Summe höchstens 0,55 Gew.-% betragen und zu den bis zu 0,05 % P und bis zu 0,12 % N zählen,

wobei für den jeweiligen Mn-Gehalt %Mn, den jeweiligen Ni-Gehalt %Ni, den jeweiligen Si-Gehalt %Si, den jeweiligen er-Gehalt %Cr, den jeweiligen N-Gehalt %N und den jeweiligen B-Gehalt %B des Stahls, jeweils eingesetzt als %-Wert, gilt:

$$\%Mn + \%Ni < 5\ \%$$

und

$$0 < 200 - 30 \times \%Mn - 7 \times \%Si - 12 \times \%Cr - 16 \times \%Ni - 220 \times \%N + 34600 \times \%B < 225$$

Bei einem additiven Verfahren, für das das Stahlpulver erfindungsgemäß verwendet wird, wird zum Aufbau des Bauteils in Übereinstimmung mit dem voranstehend erläuterten Stand der Technik in einem mehrfach wiederholten Arbeitsablauf auf einer Heizplatte Stahlpulver aufgetragen. Das Stahlpulver wird dabei mittels Elektronen- oder Laserstrahl zu einer Schmelzenportion aufgeschmolzen. Die jeweils aufgeschmolzene Schmelzenportion wird zu einem festen Abschnitt des Stahlbauteils abgekühlt. Während der Herstellung wird das auf diese Weise abschnittsweise wachsende Bauteil mittels der Heizplatte auf einer Temperatur THeiz gehalten, die mindestens einer Mindestheiztemperatur Tmin entspricht und höchstens 225 °C beträgt (Tmin ≤ THeiz ≤ 225 °C).

Erfindungsgemäß wird nun bei einem solchen Verfahren ein in der voranstehend erwähnten und nachfolgend im Einzelnen erläuterten Weise erfindungsgemäß beschaffenes Stahlpulver verwendet, wobei die Mindestheiztemperatur Tmin der Heizplatte gemäß folgender Formel bestimmt wird:

$$Tmin\ [°C] = 150 - 30 \times \%Mn - 7 \times \%Si - 12 \times \%Cr - 16 \times \%Ni - 220 \times \%N + 34600 \times \%B,$$

wobei mit %Mn der jeweilige Mn-Gehalt, mit %Si der jeweilige Si-Gehalt, mit %Cr der jeweilige Cr-Gehalt, mit %Ni der jeweilige Ni-Gehalt, mit %N der jeweilige N-Gehalt und mit %B der jeweilige B-Gehalt des Stahls bezeichnet sind und die betreffenden Gehaltsanteile als einfache %-Werte in die Formel zur Berechnung von Tmin eingesetzt werden.

Indem mehr als 90 Masse-%, insbesondere mehr als 95 Masse-%, der Stahlpartikel eines erfindungsgemäßen Stahlpulvers einen Partikeldurchmesser von 10 - 65 μm aufweisen, kann sichergestellt werden, dass mit solchem Stahlpulver mit konventionellen Vorrichtungen der eingangs erläuterten Art durch additive Fertigung zuverlässig Bauteile erzeugt werden können. Die Selektion der geeignet großen Stahlpartikel kann in üblicherweise durch Sieben und Sichten erfolgen. Typischerweise werden dabei bis zu 2 Masse-% an Körnern, deren Durchmesser oberhalb des für die Partikeldurchmesser erfindungsgemäß vorgegebenen Bereichs liegen, und bis zu 5 Masse-% an Körnern zugelassen, deren Durchmesser unterhalb des erfindungsgemäßen Partikeldurchmesserbereichs liegen.

Die Erfindung wählt somit für die Stahlpartikel eines Stahlpulvers, das für die additive Fertigung bestimmt ist, einen Stahl aus, der einen Gehalt an Kohlenstoff ("C") von mindestens 0,8 Masse-% hat. Dieser C-Gehalt ist so eingestellt, dass die Martensitstarttemperatur ("Ms-Temperatur") des Stahls nicht wesentlich über 200 °C liegt und dabei keinesfalls 225 °C überschreitet.

Vorzugsweise wird durch Zugabe weiterer Legierungsgehalte die Zusammensetzung des Stahls so eingestellt, dass seine Martensitstarttemperatur höchstens 200 °C beträgt.

Durch die an erster Stelle über ausreichend hohe C-Gehalte erfolgende Einstellung einer niedrigen Ms-Temperatur wird vermieden, dass es beim schichtweisen Aufbau des Bauteils mehrfach zur Bildung von harten martensitischen Phasen kommt.

Gleichzeitig zeigen Stähle der erfindungsgemäß ausgewählten Art eine stetig abfallende Härte bei einer Erwärmung von Raumtemperatur (= 20 °C) bis 750 °C nach dem Abschrecken aus dem Austenit. Anders als bei Stählen, die beim Abkühlen verformungsinduzierte Ausscheidungen zwischen 300 °C und 600 °C bilden, ist die Legierung eines erfindungsgemäß ausgewählten Stahls so gewählt, dass sich beim Abkühlen keine sich bewegenden Versetzungen einstellen. Solche Versetzungen könnten Keimstellen für die Karbide oder Nitride darstellen, durch die die Bewegung der Versetzungen blockiert würde mit der Folge, dass der Werkstoff im Bereich der jeweiligen Blockierung reißen kann.

Im Gegensatz dazu weist ein erfindungsgemäß legierter Stahl beispielsweise bei einem Anlassen bei Temperaturen, die von der Raumtemperatur bis 750 °C reichen, einen monotonen Abfall der Härte/Festigkeit mit steigender Temperatur auf. Dies trägt dazu bei, dass thermische Spannungen in Bauteilen, die aus erfindungsgemäß beschaffenem Stahlpulver durch additive Fertigung erzeugt worden sind, sicher vermieden werden.

Die Ms-Temperatur des erfindungsgemäß für das Stahlpulver gewählten Stahlwerkstoffs kann in bekannter Weise durch systematische Erstellung von Abkühlkurven ("ZTU-Schaubild") experimentell ermittelt bzw. aus für den jeweiligen Stahl zur Verfügung stehenden ZTU-Schaubildern entnommen werden.

Ein besonderer Vorteil eines erfindungsgemäß verwendeten Stahlpulvers besteht darin, dass es die Herstellung von Bauteilen erlaubt, bei denen durch eine induktive Randschichthärtung eine hohe Verschleißbeständigkeit erzielt werden kann. Hierzu ist der erfindungsgemäß für die Partikel des erfindungsgemäß verwendeten Stahlpulvers ausgewählte Stahl so legiert, dass er eine hohe sogenannte "Ansprunghärte", d.h. eine Härte, die beim induktiven Randschichthärten nach dem induktiven Erwärmen und Abschrecken, jedoch vor einer abschließenden Anlassbehandlung vorliegt, von über 55 HRC aufweist. Dies ist durch die erfindungsgemäß vorgesehenen C-Gehalte von mindestens 0,80 Masse-% gewährleistet, wobei C-Gehalte von mindestens 0,85 Masse-% hierzu besonders vorteilhaft sind. Durch die hohen C-Gehalte des erfindungsgemäß für die Stahlpartikel des erfindungsgemäß verwendeten Stahlpulvers ausgewählten Stahls wird somit nicht nur die Ms-Temperatur auf die gewünschten Werte gesenkt, sondern auch die Voraussetzung für die Ausbildung einer hohen Härte und der Entstehung von verschleißhemmenden Karbiden im aus erfindungsgemäß verwendetem Stahlpulver additiv gefertigten Bauteilen geschaffen. Dabei hat sich eine Beschränkung der C-Gehalte auf Werte von bis zu 1,2 Masse-%, insbesondere höchstens 1,0 Masse-%, mit Blick auf die Vermeidung von Restaustenit bei Raumtemperaturin aus erfindungsgemäß verwendetem Stahlpulver additiv gefertigten Bauteilen als besonders zweckmäßig herausgestellt.

Silizium ("Si") trägt im erfindungsgemäß ausgewählten Stahl zur Durchvergütbarkeit und Festigkeit bei. Hierzu sind Si-Gehalte von 0,1 Masse-% bis 1 Masse-% vorgesehen. Um negative Einflüsse der Anwesenheit von Si, wie beispielsweise eine Verminderung der Zähigkeit, sicher zu verhindern, kann der Si-Gehalt auf höchstens 0,7 Masse-%, insbesondere höchstens 0,4 Masse-% beschränkt werden.

Mangan ("Mn") ist im erfindungsgemäß ausgewählten Stahl in Gehalten von 0,1 Masse-% bis 4,0 Masse-% vorgesehen. Mn trägt zur angestrebten Senkung der Ms-Temperatur bei und steigert die Durchvergütbarkeit des aus erfindungsgemäß verwendetem Stahlpulver additiv gefertigten Bauteils. Optimale Wirkungen der Anwesenheit von Mn im erfindungsgemäß ausgewählten Stahl können bei Mn-Gehalten von mindestens 1,0 Masse-%, insbesondere mindestens 1,6 Masse-% oder mindestens 1,7 Masse-%, erzielt werden. Dabei lassen sich die durch die Zugabe von Mn erzielten positiven Effekte bei Gehalten von bis zu 3 Masse-%, insbesondere bis zu 2,5 Masse-% oder bis zu 2,1 Masse-%, besonders zielgerichtet nutzen.

Nickel ("Ni") kann dem erfindungsgemäß ausgewählten Stahl in Gehalten von bis zu 2,0 Masse-% zugegeben werden, um die Ms-Temperatur zu senken. Eine Wirkung von Ni wird dabei bei Gehalten von $\geq$ 0,3 Masse-%, erzielt. Vorzugsweise wird jedoch auf Ni als wirksames Legierungselement verzichtet oder auf höchstens 0,5 Masse-%, insbesondere < 0,3 Masse-%, beschränkt, um die Legierungskosten des erfindungsgemäß verwendeten Stahlpulvers zu minimieren. Gehalte von < 0,3 Masse-% Ni können als in Bezug auf seine Eigenschaften unwirksame Verunreinigungen in den erfindungsgemäß verwendeten Stahl gelangen, wenn dieser unter Verwendung von Schrott erzeugt wird. Vorzugweise wird bei den Ausgestaltungen der Erfindung, bei denen kein wirksamer Ni-Gehalt im ausgewählten Stahl vorhanden sein soll, der Ni-Gehalt dennoch auf weniger als 0,1 Masse-% beschränkt.

Die Summe %Mn + %Ni der Gehalte %Mn an Mn und %Ni an Ni sind bei einem erfindungsgemäß ausgewählten Stahl auf weniger als 5 Masse-% beschränkt, um sicherzustellen, dass der Stahl bei der im Zuge der additiven Fertigung eintretenden Abkühlung überwiegend martensitisch umwandelt und nur allenfalls geringe Restaustenitgehalte im Gefüge des erhaltenen Bauteils vorhanden sind (%Mn + %Ni < 5 Masse-%).

Chrom ("Cr") in Gehalten von bis zu 6 Masse-%, insbesondere bis zu 5 Masse-% oder bis zu 4 Masse-%, Molybdän in Gehalten von bis zu 3,0 Masse-%, insbesondere bis zu 2 Masse-% oder bis zu 1,5 Masse-%, Wolfram ("W") in Gehalten von bis zu 6 Masse-%, insbesondere bis zu 4 Masse-% oder bis zu 3 Masse-%, und Bor ("B") in Gehalten von bis zu 0,0030 Masse-%, insbesondere bis zu 0,0020 Masse-%, können jeweils optional zur Verbesserung der Durchvergütbarkeit im erfindungsgemäß ausgewählten Stahl vorhanden sein.

Wolfram ("W") wirkt im Vergleich zu Mo bezüglich der Vergütbarkeit weniger stark, kann aber mit Blick auf die Legierungskosten als Substitutionselement für Mo eingesetzt werden. Durch die Zugabe wirksamer Gehalte an Mo von mindestens 0,5 Masse-% und/oder W von mindestens 0,75 Masse-% kann die Bildung von Karbiden unterstützt werden, durch die die Verschleißbeständigkeit eines aus erfindungsgemäß legiertem Stahlpulver additiv gefertigten Bauteils erhöht wird. Eine für die Zwecke der Erfindung ausreichende Wirkung von Mo und/oder W kann dabei schon dadurch erreicht werden, dass die Summe der Gehalte an Mo und/oder W auf höchstens 0,7 Masse-% beschränkt wird, wobei Mo und W bis zu dieser Gehaltsgrenze jeweils auch alleine vorhanden sein können. Soll auf die Wirkung von Mo und W verzichtet werden, wird der Gehalt an diesen Elementen auf Werte beschränkt, die im Verunreinigungsbereich liegen, also ≤ 0,10 Masse-%, insbesondere ≤ 0,05 Masse-% betragen, wobei in diesem Fall optimaler Weise die Summe der Gehalte an Mo und W höchstens diese Werte annimmt.

Optional zugegebenes Cr in Gehalten von mindestens 0,1 Masse-% trägt ebenfalls zur Härtesteigerung und Verbesserung der Verschleißbeständigkeit durch Karbidbildung bei.

Aluminium ("Al") ist im erfindungsgemäß ausgewählten Stahl in Gehalten von 0,004 Masse-% bis 0,035 Masse-% vorhanden, da es bei der Erzeugung des Stahls zur Desoxidation eingesetzt wird. Besonders wirksam ist Al, wenn es in Gehalten von 0,015 - 0,030 Masse-% zugegeben wird.

Vanadium ("V") ist im erfindungsgemäß ausgewählten Stahl ebenfalls zur Steigerung der Verschleißbeständigkeit in Gehalten von mindestens 0,02 Masse-% vorhanden. Um die Bildung eines Sekundärhärtemaximums zu verhindern, ist der V-Gehalt jedoch auf 0,3 % beschränkt. Optimale Wirkungen der Anwesenheit von V ergeben sich bei V-Gehalten von mindestens 0,05 Masse-%, insbesondere mindestens 0,07 Masse-%.

Schwefel ("S") in Gehalten von bis zu 0,05 Masse-% kann die Zerspanbarkeit von aus erfindungsgemäß verwendetem Stahlpulver additiv gefertigten Bauteilen verbessern. Dieser Effekt kann bei S-Gehalten von mindestens 0,008 Masse-%, insbesondere mindestens 0,01 Masse-%, erzielt werden. Höhere S-Gehalte können jedoch zu Rotbruch führen. Um dies sicher zu verhindern, kann der S-Gehalt auf höchstens 0,03 Masse-% beschränkt werden. S-Gehalte von weniger als 0,008 Masse-% sind hinsichtlich der Eigenschaften des erfindungsgemäß ausgewählten Stahls unwirksam und zählen zu den herstellungsbedingt unvermeidbaren Verunreinigungen. Sie gelangen bei der Erzeugung in den Stahl und können auch dann hingenommen werden, wenn S nicht gezielt zur Verbesserung der Zerspanbarkeit genutzt werden soll.

Titan ("Ti") kann dem erfindungsgemäß ausgewählten Stahl in Gehalten von bis zu 0,1 Masse-% zugegeben werden, um durch Karbidbildung die Verschleißfestigkeit von aus erfindungsgemäß verwendetem Pulver additiv gefertigten Bauteilen zu verbessern. Diese Wirkung kann sicher bei Ti-Gehalten von mindestens 0,01 Masse-% erzielt werden. Bei Ti-Gehalten von mehr als 0,1 Masse-% kann es jedoch zur Bildung von groben Karbiden kommen, die die Zähigkeit des Werkstoffs vermindern würden. Optimierte Wirkungen der jeweils optionalen Anwesenheit von Ti lassen sich bei Ti-Gehalten von bis zu 0,2 Masse-%, insbesondere weniger als 0,2 Masse-%, erzielen.

Wie Ti bildet auch Niob ("Nb") Karbide, die die Verschleißbeständigkeit von aus erfindungsgemäß verwendetem Pulver additiv gefertigten Bauteilen erhöht. Diese Wirkung lässt sich bei Nb-Gehalten von mindestens 0,01 Masse-% sicher erzielen. Besonders effektiv lassen sich die durch die jeweils optionale Anwesenheit von Nb im erfindungsgemäß verwendeten Stahl möglichen Wirkungen nutzen, wenn der Nb-Gehalt auf höchstens 0,02 Masse-%, insbesondere weniger als 0,02 Masse-%, beschränkt ist.

Zu den herstellungsbedingt unvermeidbaren Verunreinigungen, deren Gehalte in Summe höchstens 0,55 Masse-% betragen dürfen, gehören Gehalte an allen Legierungselementen, die im Zuge seiner Erschmelzung und Weiterverarbeitung in den Stahl gelangen, dabei jedoch jeweils in Gehalten vorliegen, in denen sie keine Wirkung in Bezug auf die hier genutzten Eigenschaften des erfindungsgemäß für die Stahlpartikel des Stahlpulvers ausgewählten Stahls haben. Zu den Verunreinigungen gehören Gehalte an Phosphor ("P") von bis zu 0,05 Masse-% und Stickstoff ("N") von bis zu 0,12 Masse-%, bevorzugt höchstens 0,10 Masse-% oder höchstens 0,05 Masse-%.

Erfindungsgemäß sind die Gehalte %Mn, %Si, %Cr, %Ni, %N und %B an Mn, Si, Cr, Ni, N und B so aufeinander abgestimmt, dass der dimensionslose Term

$$A = 200 - 30 \times \%Mn - 7 \times \%Si - 12 \times \%Cr - 16 \times \%Ni - 220 \times \%N + 34600 \times \%B$$

die Bedingung

$$0 < A < 225$$

erfüllt, wenn die betreffenden Gehalte %Mn, %Si, %Cr, %Ni, %N und %B als einfache %-Werte eingesetzt werden. Auf diese Weise ist sichergestellt, dass die Ms-Temperatur des erfindungsgemäß für die Stahlpartikel des Stahlpulvers vorgesehenen Stahls jeweils deutlich unterhalb von 225 °C liegt.

Derart niedrige Ms-Temperaturen erlauben die problemlose additive Verarbeitung von erfindungsgemäß legiertem Stahlpulver mit konventionellen Vorrichtungen, die mit einer Heizplatte ausgerüstet sind, welche den jeweils verfestigten Teil des Bauteils auf Temperaturen von bis zu 225 °C, insbesondere bis zu 200 °C, halten können. So konnte experimentell gezeigt werden, dass es mit erfindungsgemäß beschaffenem Stahlpulver zuverlässig gelingt, Bauteile additiv zu fertigen, die frei von Mikrorissen sind, und zwar mit konventionellen Vorrichtungen, in denen der jeweils verfestigte Abschnitt des herzustellenden Teils auf niedrigen Heiztemperaturen gehalten worden ist.

Das Verfahren, auf das die erfindungsgemäße Verwendung gerichtet ist, sieht dementsprechend vor, dass der additive Aufbau eines Bauteils aus erfindungsgemäß beschaffenem Stahlpulver auf einer Heizplatte erfolgt, deren Heiztemperatur THeiz mindestens einer Mindestheiztemperatur Tmin entspricht, die in Abhängigkeit vom jeweiligen Mn-Gehalt %Mn, vom jeweiligen Si-Gehalt %Si, vom jeweiligen Cr-Gehalt %Cr, vom jeweiligen Ni-Gehalt %Ni, vom jeweiligen N-Gehalt %N und vom jeweiligen B-Gehalt %B des Stahls nach Maßgabe der oben bereits zur Bestimmung von Tmin angegebenen Formel berechnet wird. Für die Heiztemperatur THeiz der Heizplatte gilt dann Tmin ≤ THeiz ≤ 225 °C, insbesondere Tmin ≤ THeiz ≤ 220 °C.

Dieser Maßgabe folgend haben sich in der Praxis Mindestheiztemperaturen Tmin von 150 °C, insbesondere mindestens 175 °C, bewährt.

Nachfolgend wird die Erfindung anhand von Ausführungsbeispielen näher erläutert.

Schmelzen von unter den Werkstoffnummern 1.2842 und 1.2510 genormten, den Maßgaben der Erfindung entsprechenden Al-beruhigten Stählen sowie des nicht unter die Erfindung fallenden Stahls mit der Werkstoffnummer 1.6587, die jeweils Al-Gehalte von 0,015 - 0,030 Masse-% aufwiesen, sind in konventioneller Weise jeweils zu Stahlpartikeln verdüst worden.

Die bei den hier berichteten Versuchen im Detail verwendeten Zusammensetzungen der Stähle 1.2842, 1.2510 und 1.6587 sind in Tabelle 1 angegeben. Die Stähle enthielten jeweils allenfalls unwirksame, den Verunreinigungen zuzuordnende Gehalte an Ni, N und B.

Ebenso ist in Tabelle 1 für die jeweilige konkrete Stahlzusammensetzung der Wert A des Terms

$$A = 200 - 30 \times \%Mn - 7 \times \%Si - 12 \times \%Cr - 16 \times \%Ni - 220 \times \%N + 34600 \times \%B$$

und die gemäß der Formel

$$Tmin\ [°C] = 150 - 30 \times \%Mn - 7 \times \%Si - 12 \times \%Cr - 16 \times \%Ni - 220 \times \%N + 34600 \times \%B,$$

berechnete Mindestheiztemperatur Tmin sowie die experimentell ermittelte Ms-Temperatur angegeben.

Aus den erhaltenen Stahlpartikeln sind jeweils diejenigen durch Sieben und Sichten selektiert worden, deren Partikeldurchmesser 10 - 65 μm betrug.

Die so selektierten Stahlpartikel bildeten jeweils drei Stahlpulver, wobei die Stahlpartikel des ersten Stahlpulvers aus dem Stahl 1.2842, die Stahlpartikel des zweiten Stahlpulvers aus dem Stahl 1.2510 und die Stahlpartikel des dritten Stahlpulvers aus dem Stahl 1.6587 bestanden.

Aus den Stahlpulvern wurden in jeweils drei Versuchen E1_1 bis E1_3, E2_1 bis E2_3 und V_1 bis V_3 Bauteile durch Anwendung einer additiven Fertigungsmethode, nämlich durch SLM-Verfahren (Selective Laser Melting) mit einer Laserleistung zwischen 130 und 400 Watt, Schichtdicken zwischen 30 und 60 μm und Spurabständen zwischen 60 und 120 μm, auf einer Heizplatte aufgebaut, die bei einer Temperatur THeiz gehalten wurde. Dementsprechend ist der jeweils verfestigte, auf der Heizplatte sitzende Abschnitt des Bauteils auf der Temperatur THeiz gehalten worden.

Die Heiztemperatur THeiz ist von Versuch zu Versuch variiert worden.

Von den erhaltenen Bauteilen sind Schliffbilder erzeugt worden, die bei 500facher Vergrößerung unter dem Lichtmikroskop auf Risse untersucht worden sind. Zeigten sich solche Risse, sind diese als "mikroskopisch" bewertet worden.

Die Ergebnisse der Bewertung sind in Tabelle 2 eingetragen.

Es zeigte sich, dass bei der Verarbeitung von Stahlpulvern, die aus den den Maßgaben der Erfindung entsprechenden Stählen 1.2842 und 1.2510 bestanden, sowie bei einer nach Maßgabe der Erfindung erfolgenden Einstellung der Temperatur THeiz zuverlässig Bauteile erzeugt werden konnten, die rissfrei (Bewertung "ohne Risse") waren.

Dagegen führte die Einstellung von zu geringen, unterhalb der erfindungsgemäß bestimmten Mindestheiztemperatur Tmin liegenden Heiztemperaturen THeiz zu Bauteilen, die mikroskopische Risse aufwiesen.

Ebenso gelang es nicht, mit dem aus dem nicht erfindungsgemäß ausgewählten Stahl 1.6587 erzeugten Stahlpulver rissfreie Bauteile zu erzeugen.

Tabelle 1

| Stahl | %C | %Si | %Mn | %Cr | %Mo + %W | %V | Ms | Tmin | A |
|---|---|---|---|---|---|---|---|---|---|
| | [%] *) | | | | | | [°C] | | |
| 1.2842 | 0,87 | 0,20 | 1.97 | 0,41 | 0,02 | 0,11 | 175 | 85 | 135 |
| 1.2510 | 0,96 | 0,32 | 1,12 | 0,60 | 0,58 | 0,20 | 205 | 107 | 157 |
| 1.6587 | 0,21 | 0,21 | 0,62 | 1,62 | 0,22 | 0,03 | 392 | 111 | 161 |
| *) Angaben in Masse-%, Rest Fe und unvermeidbare Verunreinigungen | | | | | | | | | |

Tabelle 2

| Versuch | Stahl | THeiz | Risse? | Erfindung? |
|---|---|---|---|---|
| E1_1 | | RT **) | Micro | nein |
| E1_2 | 1.2842 | 170 | Ohne | Ja |
| E1_3 | | 200 | Ohne | Ja |
| E2_1 | | 100 | Micro | nein |
| E2_2 | 1.2510 | 200 | Ohne | Ja |
| E2_3 | | 250 | Ohne | Ja |
| V_1 | | RT | Micro | nein |
| V_2 V_3 | 1.6587 | 200 | Micro | nein |
| | | 300 | Micro | nein |
| **) RT = Raumtemperatur | | | | |

**Patentansprüche**

1. Verwendung eines Stahlpulvers für eine additive Fertigung eines Stahlbauteils, bei der in einem mehrfach wiederholten Arbeitsablauf auf einer Heizplatte zum Aufbau des Bauteils Stahlpulver aufgetragen wird, das aufgetragene Stahlpulver mittels Elektronen- oder Laserstrahl zu einer Schmelzenportion aufgeschmolzen wird und die jeweils aufgeschmolzene Schmelzenportion zu einem festen Abschnitt des Stahlbauteils abgekühlt wird, wobei das auf diese Weise abschnittsweise wachsende Bauteil während der Herstellung mittels der Heizplatte auf einer Temperatur gehalten wird, die mindestens einer Mindestheiztemperatur Tmin entspricht und höchstens 225 °C beträgt, und wobei das Stahlpulver aus Stahlpartikeln eines Stahls gebildet ist, der eine Martensitstarttemperatur Ms von höchstens 225 °C aufweist und, in Masse-%, aus

C:      0,80      - 1,20 %,
Si:      0,1      - 1,0 %,
Mn:      0,1      - 4,0 %,
Ni:               ≤ 2,0 %,
Cr:               ≤ 6,00 %,
Mo:               ≤ 3,0 %,
W:                ≤ 6,0 %,
S:                ≤ 0,05 %,
Al:      0,004    - 0,035 %,
V:       0,02     - 0,20 %,
Ti:               ≤ 0,10 %,
Nb:               ≤ 0,40 %,
B:                ≤ 0,0030 %,

und als Rest aus Eisen und stahltypischen Verunreinigungen besteht, die in Summe höchstens 0,55 Gew.-% betragen und zu den bis zu 0,05 % P und bis zu 0,12 % N zählen,

wobei für den jeweiligen Mn-Gehalt %Mn, den jeweiligen Ni-Gehalt %Ni, den jeweiligen Si-Gehalt %Si, den jeweiligen er-Gehalt %Cr, den jeweiligen N-Gehalt %N und den jeweiligen B-Gehalt %B des Stahls, jeweils eingesetzt als %-Wert, gilt:

$$\%Mn + \%Ni < 5\ \%$$

und

$$0 < 200 - 30 \times \%Mn - 7 \times \%Si - 12 \times \%Cr - 16 \times \%Ni - 220 \times \%N + 34600 \times \%B < 225$$

2. Verwendung nach Anspruch 1, **dadurch gekennzeichnet, dass** der C-Gehalt des Stahls 0,85 - 1,0 Masse-% beträgt.

3. Verwendung nach einem der voranstehenden Ansprüche, **dadurch gekennzeichnet, dass** der Si-Gehalt des Stahls höchstens 0,4 Masse-% beträgt.

4. Verwendung nach einem der voranstehenden Ansprüche, **dadurch gekennzeichnet, dass** der Mn-Gehalt des Stahls 1,7 - 2,1 Masse-% beträgt.

5. Verwendung nach einem der voranstehenden Ansprüche, **dadurch gekennzeichnet, dass** der Cr-Gehalt des Stahls höchstens 4 Masse-% beträgt.

6. Verwendung nach Anspruch 5, d a **durch gekennzeichnet, dass** der Cr-Gehalt des Stahls höchstens 1 Masse-% beträgt.

7. Verwendung nach einem der voranstehenden Ansprüche, **dadurch gekennzeich net**, **dass** der V-Gehalt des Stahls mindestens 0,07 Masse-% beträgt.

8. Verwendung nach einem der voranstehenden Ansprüche, **dadurch gekennzeichnet, dass** die Summe der Gehalte an Mo und/oder W des Stahls höchstens 0,7 Masse-% beträgt.

9. Verwendung nach Anspruch 8, d a **durch gekennzeichnet, dass** Mo- und der W-Gehalt des Stahls in Summe weniger als 0,05 Masse-% beträgt.

10. Verwendung nach einem der voranstehenden Ansprüche, **dadurch gekennzeichnet, dass** mehr als 90 % der Stahlpartikel einen durch Sieben und Sichten selektierten Partikeldurchmesser von 10 $\mu$m bis 65 $\mu$m aufweisen.

11. Verwendung nach einem der voranstehenden Ansprüche, **dadurch gekennzeichnet, dass** die Mindestheiztemperatur Tmin der Heizplatte gemäß folgender Formel (3) bestimmt wird:

$$Tmin\ [°C] = 150 - 30 \times \%Mn - 7 \times \%Si - 12 \times \%Cr - 16 \times \%Ni - 220 \times \%N + 34600 \times \%B,$$

wobei mit %Mn der jeweilige Mn-Gehalt, mit %Si der jeweilige Si-Gehalt, mit %Cr der jeweilige er-Gehalt, mit %Ni der jeweilige Ni-Gehalt, mit %N der jeweilige N-Gehalt und mit %B der jeweilige B-Gehalt B des Stahls bezeichnet sind.

12. Verwendung gemäß Anspruch 11, **dadurch gekennzeichnet, dass** die Temperatur Tmin mindestens 150 °C beträgt.

13. Verwendung nach Anspruch 12, **dadurch gekennzeichnet, dass** die Temperatur Tmin mindestens 175 °C beträgt.

14. Verwendung nach einem der Ansprüche 11 - 13, **dadurch gekennzeichnet, dass** die Temperatur Tmin höchstens 200 °C beträgt.

**Claims**

1. Use of a steel powder for additive manufacturing of a steel component, in which, in a work process which is repeated several times, steel powder is applied to a heating plate to build up the component, the applied steel powder is melted by means of an electron beam or laser beam to form a melt portion, and the melted melt portion is cooled to form a solid portion of the steel component, wherein the component growing in portions in this way, by means of the heating plate, is kept at a temperature which corresponds at least to a minimum heating temperature Tmin and is at most 225°C during production, and wherein the steel powder is formed of steel particles of a steel which has a martensite start temperature Ms of at most 225°C and, in % by mass, of

   C: 0.80 - 1.20%,
   Si: 0.1 - 1.0%,
   Mn: 0.1 - 4.0%,
   Ni: ≤ 2.0%,
   Cr: ≤ 6.00%,
   Mo: ≤ 3.0%,
   W: ≤ 6.0%,
   S: ≤ 0.05%,
   Al: 0.004 - 0.035%,
   V: 0.02 - 0.20%,
   Ti: ≤ 0.10%,
   Nb: ≤ 0.40%,
   B: ≤ 0.0030%,
   and the remainder consists of iron and steel-typical impurities, which in total do not exceed 0.55 wt. % and include up to 0.05% P and up to 0.12% N,
   wherein for the respective Mn content %Mn, the respective Ni content %Ni, the respective Si content %Si, the respective Cr content %Cr, the respective N content %N and the respective B content %B of the steel, each introduced as a % value, the following applies:

$$\%Mn + \%Ni < 5\%$$

   and

$$0 < 200 - 30 \times \%Mn - 7 \times \%Si - 12 \times \%Cr - 16 \times \%Ni - 220 \times \%N + 34600 \times \%B < 225$$

2. Use according to claim 1, **characterized in that** the C content of the steel is 0.85 - 1.0% by mass.

3. Use according to any of the preceding claims, **characterized in that** the Si content of the steel is at most 0.4% by mass.

4. Use according to any of the preceding claims, **characterized in that** the Mn content of the steel is 1.7 - 2.1% by mass.

5. Use according to any of the preceding claims, **characterized in that** the Cr content of the steel is at most 4% by mass.

6. Use according to claim 5, **characterized in that** the Cr content of the steel is at most 1% by mass.

7. Use according to any of the preceding claims, **characterized in that** the V content of the steel is at least 0.07% by mass.

8. Use according to any of the preceding claims, **characterized in that** the sum of the content of Mo and/or W of the steel is at most 0.7% by mass.

9. Use according to claim 8, **characterized in that** the Mo and W content of the steel is in total less than 0.05% by mass.

10. Use according to any of the preceding claims, **characterized in that** more than 90% of the steel particles have a particle diameter of 10 μm to 65 μm selected by sieving and sifting.

**11.** Use according to any of the preceding claims, **characterized in that** the minimum heating temperature Tmin of the heating plate is determined according to the following formula (3):

Tmin[°C] = 150 - 30 × %Mn - 7 × %Si - 12 × %Cr - 16 × %Ni - 220 × %N + 34600 × %B, wherein %Mn denotes the respective Mn content, %Si the respective Si content, %Cr the respective Cr content, %Ni the respective Ni content, %N the respective N content and %B the respective B content of the steel.

**12.** Use according to claim 11, **characterized in that** the temperature Tmin is at least 150°C.

**13.** Use according to claim 12, **characterized in that** the temperature Tmin is at least 175°C.

**14.** Use according to any of claims 11 to 13, **characterized in that** the temperature Tmin is at most 200°C.

**Revendications**

**1.** Utilisation d'une poudre d'acier pour une fabrication additive d'un composant en acier, dans laquelle de la poudre d'acier est appliquée sur une plaque chauffante pour la construction du composant au cours d'un processus de travail répété plusieurs fois, la poudre d'acier appliquée est fondue à l'aide d'un faisceau d'électrons ou d'un faisceau laser pour former une portion de masse fondue et la portion de masse fondue respectivement fondue est refroidie pour former une section solide du composant en acier, le composant qui se développe ainsi par sections étant maintenu, pendant la production à l'aide de la plaque chauffante, à une température qui correspond au moins à une température de chauffage minimale Tmin et qui est d'au plus 225 °C, et la poudre d'acier étant formée de particules d'acier d'un acier qui présente une température de début de la martensite Ms d'au plus 225 °C et qui est constitué, en % en masse, de

C : 0,80 à 1,20 %,
Si : 0,1 à 1,0 %,
Mn : 0,1 à 4,0 %,
Ni : ≤ 2,0 %,
Cr : ≤ 6,00 %,
Mo : ≤ 3,0 %,
W : ≤ 6,0 %,
S : ≤ 0,05 %,
Al : 0,004 à 0,035 %,
V : 0,02 à 0,20 %,
Ti : ≤ 0,10 %,
Nb : ≤ 0,40 %,
B : ≤ 0,0030 %,
et est constitué, comme reste, de fer et d'impuretés typiques de l'acier, dont la somme est d'au plus 0,55 % en poids et qui comprennent jusqu'à 0,05 % de P et jusqu'à 0,12 % de N,
les formules ci-dessous s'appliquant pour la teneur en Mn respective en % de Mn, la teneur en Ni respective en % de Ni, la teneur en Si respective en % de Si, la teneur en Cr respective en % de Cr, la teneur en N respective en % de N et la teneur en B respective en % de B de l'acier, respectivement utilisées comme valeurs en % :

$$\text{\% de Mn} + \text{\% de Ni} < 5\ \%$$

et 0 < 200 - 30 × % de Mn - 7 × % de Si - 12 × % de Cr - 16 × % de Ni - 220 × % de N + 34 600 × % de B < 225.

**2.** Utilisation selon la revendication 1, **caractérisée en ce que** la teneur en C de l'acier va de 0,85 à 1,0 % en masse.

**3.** Utilisation selon l'une des revendications précédentes,
**caractérisée en ce que** la teneur en Si de l'acier est d'au plus 0,4 % en masse.

**4.** Utilisation selon l'une des revendications précédentes,
**caractérisée en ce que** la teneur en Mn de l'acier va de 1,7 à 2,1 % en masse.

**5.** Utilisation selon l'une des revendications précédentes,
**caractérisée en ce que** la teneur en Cr de l'acier est d'au plus 4 % en masse.

**6.** Utilisation selon la revendication 5, **caractérisée en ce que** la teneur en Cr de l'acier est d'au plus 1 % en masse.

**7.** Utilisation selon l'une des revendications précédentes,
**caractérisée en ce que** la teneur en V de l'acier est d'au moins 0,07 % en masse.

**8.** Utilisation selon l'une des revendications précédentes,
**caractérisée en ce que** la somme des teneurs en Mo et/ou en W de l'acier est d'au plus 0,7 % en masse.

**9.** Utilisation selon la revendication 8, **caractérisée en ce que** la teneur en Mo et en W de l'acier est inférieure à 0,05 % en masse au total.

**10.** Utilisation selon l'une des revendications précédentes,
**caractérisée en ce que** plus de 90 % des particules d'acier présentent un diamètre de particule allant de 10 $\mu$m à 65 $\mu$m, lequel diamètre est sélectionné par tamisage et criblage.

**11.** Utilisation selon l'une des revendications précédentes,
**caractérisée en ce que** la température de chauffage minimale Tmin de la plaque chauffante est déterminée conformément à la formule (3) suivante :

$$\text{Tmin[°C]} = 150 - 30 \times \text{\% de Mn} - 7 \times \text{\% de Si} - 12 \times \text{\% de Cr} - 16 \times \text{\% de Ni} - 220 \times \text{\% de N} + 34\,600 \times \text{\% de B,}$$

dans laquelle % de Mn désignant la teneur en Mn respective, % de Si désignant la teneur en Si respective, % de Cr désignant la teneur en Cr respective, % de Ni désignant la teneur en Ni respective, % de N désignant la teneur en N respective et % de B désignant la teneur en B respective de l'acier.

**12.** Utilisation selon la revendication 11, **caractérisée en ce que** la température Tmin est d'au moins 150 °C.

**13.** Utilisation selon la revendication 12, **caractérisée en ce que** la température Tmin est d'au moins 175 °C.

**14.** Utilisation selon l'une des revendications 11 à 13, **caractérisée en ce que** la température Tmin est d'au plus 200 °C.

**IN DER BESCHREIBUNG AUFGEFÜHRTE DOKUMENTE**

**In der Beschreibung aufgeführte Patentdokumente**

- WO 0179575 A1
- EP 2662462 A1
- EP 0754942 A1

**In der Beschreibung aufgeführte Nicht-Patentliteratur**

- Additive Fertigungsverfahren. VDI Statusreport. Verein Deutsche r Ingenieure e.V., Fachbereich Produktionstechnik und Fertigungsverfahren, September 2014
- Wärmebehandlung von Stahl - Randschichthärten. Merkblatt 236. Wirtschaftsvereinigung Stahl, 2009